(19) Europäisches Patentamt
European Patent Office
Office européen des brevets

(11) EP 2 623 525 B1

(12) # EUROPEAN PATENT SPECIFICATION

(45) Date of publication and mention of the grant of the patent:
**07.12.2016 Bulletin 2016/49**

(21) Application number: **11829009.7**

(22) Date of filing: **26.09.2011**

(51) Int Cl.:
***C08F 8/48*** (2006.01) ***C08F 8/28*** (2006.01)
***C08F 216/38*** (2006.01) ***C08L 29/14*** (2006.01)
***C08K 5/103*** (2006.01) *C08L 71/02* (2006.01)

(86) International application number:
**PCT/JP2011/071847**

(87) International publication number:
**WO 2012/043455 (05.04.2012 Gazette 2012/14)**

(54) **POLYVINYL ACETAL RESIN FOR THERMOFORMING**

POLYVINYLACETALHARZ ZUM THERMOFORMEN

RÉSINE D'ACÉTAL POLYVINYLIQUE POUR LE THERMOFORMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**05.01.2011 JP 2011000847**
**05.01.2011 JP 2011000846**
**08.10.2010 JP 2010228355**
**28.09.2010 JP 2010217934**

(43) Date of publication of application:
**07.08.2013 Bulletin 2013/32**

(73) Proprietor: **Kuraray Co., Ltd.**
**Okayama 710-0801 (JP)**

(72) Inventors:
- **TSUJIMOTO Takuya**
**Kurashiki-shi**
**Okayama 710-0801 (JP)**
- **TOKUCHI Kazuki**
**Kurashiki-shi**
**Okayama 710-0801 (JP)**
- **TSUJI Wataru**
**Kurashiki-shi**
**Okayama 710-0801 (JP)**
- **HIGASHIDA Noboru**
**Kurashiki-shi**
**Okayama 710-0801 (JP)**
- **FUJIWARA Naoki**
**Kurashiki-shi**
**Okayama 710-0801 (JP)**

(74) Representative: **D Young & Co LLP**
**120 Holborn**
**London EC1N 2DY (GB)**

(56) References cited:
**WO-A1-2008/096403**
**JP-A- 2 123 103**
**JP-A- 5 001 108**
**JP-A- 5 001 109**
**JP-A- 10 139 496**
**JP-A- 10 330 420**
**JP-A- 2000 281 721**
**JP-A- 2001 089 520**
**JP-A- 2002 138 107**
**JP-A- 2003 137 931**
**JP-A- 2004 217 763**
**US-A1- 2002 006 508**
**US-A1- 2005 159 545**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 623 525 B1

## Description

TECHNICAL FIELD

The present invention relates to a polyvinyl acetal resin for thermoforming that allows providing a molded product that is excellent in stability at thermoforming, and excellent in heat resistance. More specifically, the invention relates to a polyvinyl acetal resin for thermoforming that can be suitably used even in the use for molding that requires high thermal stability such as the case of performing melt molding at high temperature as mixed with other resins, or the case of demanding further stable molding and quality.

BACKGROUND ART

A polyvinyl acetal resin is manufactured by acetalization of a polyvinyl alcohol resin with aldehyde, and is conventionally used in wide fields such as an interlayer for front glass or safety glass of an automobile, various binders, and adhesives.

However, the polyvinyl acetal resin has insufficient thermal stability, and when it is used for thermoforming, it may cause generation of pyrolysis gas, generation of a cross-linked gelled product and the like by the thermal decomposition or thermal deterioration. Particularly, when the polyvinyl acetal resin is mixed with other resins and melt molding is performed at high temperature, the decomposition or deterioration occurs easily, which may cause coloration of a molded product, decline of physical properties and the like, and difficulty in performing stable molding for a long time, or difficulty in obtaining a product having demanded quality.

As a means of improving the moldability of such polyvinyl acetal resin, a plasticizer is often blended in the use of the glass interlayer and the like. For example, JP 2001-206741 A, JP 2001-226152 A, and JP 2008-105942 A disclose an interlayer for laminated glass including a polyvinyl acetal resin and various plasticizers. However, although the moldability increases by blending a plasticizer and the like, it may have undesirable influences such as decline of the strength, the elastic modulus or the surface hardness of a molded product, and slow bleeding out of the plasticizer depending on the use. In addition, JP Heisei 7-17745 A discloses an interlayer for laminated glass in which poly(ε-caprolactone), which is not a plasticizer, is blended with a polyvinyl acetal resin. However, although the blending of poly(ε-caprolactone) improves the moldability, poly(ε-caprolactone) has low melting point and low heat resistance, which limits the use range. In addition, the surface hardness of a molded product may decline.

In addition, blending of various additives such as an antioxidant, a stabilizer, an ultraviolet absorber, a lubricant and a processing aid and the like was investigated, but did not achieve fundamental improvement of the thermal stability of a polyvinyl acetal resin.

As factors of governing the thermal stability of the polyvinyl acetal resin, considered are the polymerization degree, the saponification degree, the kind of modification and the amount of modification of a polyvinyl alcohol resin that is a raw material, and the kind of the acetal and the acetalization degree of the polyvinyl acetal resin, and further metal residues or unreacted aldehydes and by-products remaining in the resin, and the like. It is considered that such factors are complicatedly involved, which causes thermal deterioration such as the decomposition, the cross-linking gelation and the coloration. However, it was not clearly understood what is the mechanism for the process of the thermal deterioration for these factors, and it was not possible to obtain a polyvinyl acetal resin having sufficient thermal stability.

JP 2002-138107 A discloses an alkyl-acetalized polyvinyl alcohol resin having 100 ppm or lower of the metal ion concentration as a binder resin for ink. However, this resin also had a problem of insufficient

US2002/006508 also discloses a polyvinyl acetal resin for thermoforming which is obtained by acetalization of a polyvinyl alcohol.

Prior Art Documents

Patent Documents

Patent Document 1: JP 2001-206741A
Patent Document 2: JP 2001-226152A
Patent Document 3: JP 2008-105942A
Patent Document 4: JP Heisei 7-17745A
Patent Document 5: JP 2002-138107A
Patent Document 6: US2002/006508

## SUMMARY OF INVENTION

In view of the background art described above, the object of the invention is to provide a polyvinyl acetal resin for thermoforming that allows providing a molded product that is excellent in thermal stability, and further is excellent in heat resistance without harming the properties of a conventional polyvinyl acetal resin.

The inventors have earnestly investigated to improve the thermal stability of a polyvinyl acetal resin, and as results, found that a polyvinyl acetal resin having excellent thermal stability can be obtained by controlling the polymerization degree or the saponification degree of a polyvinyl alcohol resin to be used, and further the acetalization degree at manufacturing of the polyvinyl acetal resin, and the content of residual alkali metal or alkali earth metal to certain ranges. Furthermore, the inventors have found that it is possible to provide a molded product that is excellent in heat resistance by controlling the structure of the aldehyde used in the acetalization. The invention has been further investigated based on these findings, and completed.

That is, according to the invention, there is provided a polyvinyl acetal resin for thermoforming, the polyvinyl acetal resin being obtained by acetalization of a polyvinyl alcohol resin having a viscosity average polymerization degree of 500 to 2000 and a saponification degree of 99.5 mol% or more with aldehyde, wherein the sum of vinyl alcohol units acetalized with the aldehyde is 65 to 88 mol% with respect to the total repeating units, a content of alkali metal or alkali earth metal is 0.1 to 50 ppm, and a content of a plasticizer is 10 parts by mass or less with respect to 100 parts by mass of the polyvinyl acetal resin.

In the polyvinyl acetal resin for thermoforming according to the invention, it is preferable that the molar ratio of a vinyl alcohol unit acetalized with an aldehyde having four or more carbon atoms/a vinyl alcohol unit acetalized with an aldehyde having three or less carbon atoms is 90/10 to 0/100.

In the polyvinyl acetal resin according to the invention, it is preferable that the polyvinyl acetal resin is Polyvinyl butyral.

It is preferable that the sum of the vinyl alcohol units acetalized with the aldehyde is 70 to 88 mol% with respect to the total repeating units.

In the polyvinyl acetal resin for thermoforming according to the invention, it is preferable that no plasticizer is included in the polyvinyl acetal resin.

In the polyvinyl acetal resin for thermoforming according to the invention, it is preferable that the polyvinyl acetal resin is obtained by adjusting the pH of a slurry from 6 to 8, which is obtained by acetalizing a polyvinyl alcohol resin, and then drying the slurry.

In the invention, it is preferable that a moisture content is adjusted from 0,005% to 2%.

Further, according to the invention, there is provided a formed object and a film including the polyvinyl acetal resin for thermoforming.

Further, according to the invention, there is provided a method of manufacturing a formed object, performing a thermoforming using a polyvinyl acetal resin for thermoforming, the polyvinyl acetal resin being obtained by acetalization of a polyvinyl alcohol resin having a viscosity average polymerization degree of 500 to 2000 and a saponification degree of 99.5 mol% or more with aldehyde, wherein the sum of vinyl alcohol units acetalized with the aldehyde is 65 to 88 mol% with respect to the total repeating units, and a content of alkali metal or alkali earth metal is 0.1 to 50 ppm, and a content of a plasticizer is 10 parts by mass or less with respect to 100 parts of the polyvinyl acetal resin.

Further, according to the invention, there is provided a method of manufacturing a film, performing a thermoforming using a polyvinyl acetal resin for thermoforming, the polyvinyl acetal resin being obtained by acetalization of a polyvinyl alcohol resin having a viscosity average polymerization degree of 500 to 2000 and a saponification degree of 99.5 mol% or more with aldehyde, wherein the sum of vinyl alcohol units acetalized with the aldehyde is 65 to 88 mol% with respect to the total repeating units, and a content of alkali metal of alkali earth metal is 0.1 to 50 ppm, and a content of a plasticizer is 10 parts by mass or less with respect to 100 parts by mass of the polyvinyl acetal resin.

According to the invention, it is possible to provide a polyvinyl acetal resin for thermoforming that allows providing a molded product that has excellent thermal stability and excellent heat resistance without harming the physical properties of the molded product which conventional polyvinyl acetal resins have such as the strength and elastic modulus or the surface hardness, the surface smoothness, the transparency and the like.

## DESCRIPTION OF EMBODIMENTS

Hereinafter, the invention will be explained in detail. The polyvinyl acetal resin of the invention is, for example, a resin that includes repeating units represented by Chemical formula (1).

[Chemical formula 1]

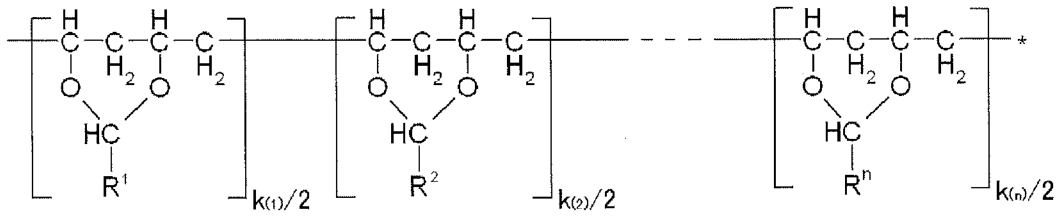

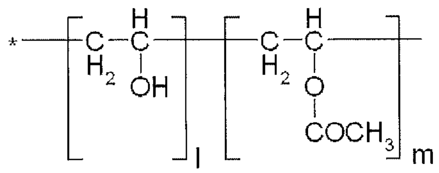

(1)

In Chemical formula (1), n is the number of the kind (natural number) of the aldehydes used in acetalization, and $R^1$, $R^2$, ..., $R^n$ are alkyl group of the aldehydes used in the acetalization reaction, or hydrogen atoms. $k_{(1)}$, $k_{(2)}$, ..., $k_{(n)}$ are the ratios (mol ratio) of the acetal units containing $R^1$, $R^2$, ..., $R^n$, respectively; 1 is the ratio (mol ratio) of the vinyl alcohol unit; and m is the ratio (mol ratio) of the vinyl acetate unit. However, $k_{(1)} + k_{(2)} + ... + k_{(n)} + l + m = 1$, and any of $k_{(1)}$, $k_{(2)}$, ..., $k_{(n)}$, 1, and m may be zero. Each of the repeating units is not limited to the sequence of the arrangement illustrated in Chemical formula (1), but may be arranged randomly, or may be arranged in a block structure, or may be arranged in a taper structure.

The polyvinyl acetal resin of the invention may be obtained by reacting a polyvinyl alcohol resin (hereinafter, also abbreviated as PVA) with an aldehyde.

The PVA used in manufacture of the polyvinyl acetal resin of the invention includes, of course, homopolymers of PVA, and also includes, for example, modified PVA obtained by copolymerization with other monomers, or modified PVA to which a functional group is introduced by terminal modification and modification after polymerization.

The viscosity average polymerization degree (hereinafter, simply abbreviated as the polymerization degree) of PVA is 500 to 2000, preferably 800 to 1700, and more preferably 1000 to 1500. If the polymerization degree of PVA is less than 500, the mechanical properties of the polyvinyl acetal resin obtained may be insufficient, and particularly the toughness may be insufficient. On the other hand, if the polymerization degree of PVA is more than 2000, the melt viscosity at the thermoforming as the polyvinyl acetal resin increases, and the manufacture of a molded product becomes difficult.

The polymerization degree (P) of PVA is measured in accordance with JIS-K6726. Specifically, the polymerization degree (P) of PVA is calculated by General formula (i) from the limiting viscosity [η] (dl/g), which is measured in 30°C water after re-saponifying the PVA completely and purifying it.

[Math. 1]

$$P = ([\eta] \times 10^3 / 8.29)^{(1/0.62)} \quad (i)$$

The saponification degree of PVA is 99.5 mol% or more, preferably 99.7 mol% or more, and particularly preferably 99.9 mol% or more. When the saponification degree is less than 99.5 mol%, the polyvinyl acetal resin obtained has insufficient thermal stability, and it may be difficult to perform stable melt molding due to the thermal decomposition and the cross-linking gelation.

PVA is not particularly limited by a manufacturing method thereof, and is obtained by saponification of vinyl ester units of a vinyl ester-based polymer. Examples of the vinyl compound monomer for forming the vinyl ester unit includes vinyl formate, vinyl acetate, vinyl propionate, vinyl valerate, vinyl caprate, vinyl laurate, vinyl stearate, vinyl benzoate, vinyl pivalate and vinyl versate and the like. Among them, the vinyl compound monomer is preferably vinyl acetate in that PVA can be obtained in good productivity.

The PVA used in the manufacture of the polyvinyl acetal resin of the invention may be a homopolymer, or may be a modified PVA to which a copolymerization unit is introduced. Examples of the kind of the copolymerization monomer include, for example, α-olefins such as ethylene, propylene, 1-butene, isobutene and 1-hexene, acrylic acid and salts thereof, acrylic acid esters such as methyl acrylate, ethyl acrylate, n-propyl acrylate and i-propyl acrylate, methacrylic acid and salts thereof, methacrylic acid esters such as methyl methacrylate, ethyl methacrylate, n-propyl methacrylate

and i-propyl methacrylate, acrylic amide derivatives such as acrylic amide, N-methyl acrylic amide and N-ethyl acrylic amide, methacrylic amide derivatives such as methacrylic amide, N-methyl methacrylic amide and N-ethyl methacrylic amide, vinyl ethers such as methylvinyl ether, ethylvinyl ether, n-propylvinyl ether, i-propylvinyl ether and n-butylvinyl ether, hydroxy group-containing vinyl ethers such as ethylene glycol vinyl ether, 1,3-propanediol vinyl ether and 1,4-butanediol vinyl ether, allyl ethers such as allyl acetate, propylallyl ether, butylallyl ether and hexylallyl ether, monomers that include oxyalkylene groups such as a polyoxyethylene group, a polyoxypropylene group and a polyoxybutylene group, vinyl silanes such as vinyl trimethoxysilane, hydroxy group-containing α-olefins or esters thereof such as isopropenyl acetate, 3-buten-1-ol, 4-penten-1-ol, 5-hexene-1-ol, 7-octen-1-ol, 9-decen-1-ol and 3-methyl-3-buten-1-ol, N-vinyl amides such as N-vinyl formamide, N-vinyl acetamide and N-vinyl pyrrolidone, carboxyl group-containing monomers derived from fumaric acid, maleic acid, itaconic acid, anhydrous maleic acid, anhydrous phthalic acid, anhydrous trimellitic acid or anhydrous itaconic acid and the like; sulfonic acid group-containing monomers derived from ethylene sulfonic acid, allylsulfonic acid, methallyl sulfonic acid, 2-acrylic amide-2-methylpropane sulfonic acid and the like; and cationic group-containing monomers derived from vinyloxyethyltrimethyl ammonium chloride, vinyloxybutyltrimethyl ammonium chloride, vinyloxyethyldimethyl amine, vinyloxymethyldiethyl amine, N-acrylic amide methyltrimethyl ammonium chloride, N-acrylic amide ethyltrimethyl ammonium chloride, N-acrylic amide dimethyl amine, allyltrimethyl ammonium chloride, methallyl trimethyl ammonium chloride, dimethylallyl amine, allylethyl amine and the like.

The content of these monomers is generally 20 mol% or less when the mol number of the total units that constitute the modified PVA is taken as 100%. In addition, the above-mentioned copolymerization unit is preferably 0.01 mol% or more in order to exhibit the merits of the copolymerization.

Examples of the method of manufacturing PVA used in the invention include known methods such as massive polymerization method, solution polymerization method, suspension polymerization method and emulsion polymerization method. Among them, massive polymerization method in which polymerization is performed in no solvent or solution polymerization method in which polymerization is performed in a solvent such as alcohol, is generally adopted. Examples of the alcohol used as a solvent at the solution polymerization include lower alcohols such as methyl alcohol, ethyl alcohol and propyl alcohol. Examples of the initiator used in the copolymerization include known initiators such as azo-based initiators or peroxide-based initiators such as α,α'-azobisisobutyronitrile, 2,2'-azobis(2,4-dimethyl-valeronitrile), benzoyl peroxide and n-propyl peroxy carbonate. The polymerization temperature is not particularly limited, but is suitably a range of 0°C to 200°C.

Next, examples of the alkaline substance used as a catalyst at saponification of PVA include potassium hydroxide and sodium hydroxide. The molar ratio of the alkaline substance used in the saponification catalyst is preferably 0.004 to 0.5, and particularly preferably 0.005 to 0.05 with respect to the vinyl acetate unit. The saponification catalyst may be added collectively in the initial stage of the saponification reaction, or may be added in addition during the saponification reaction.

Examples of the solvent of the saponification reaction include methanol, methyl acetate, dimethyl sulfoxide, dimethyl formamide and the like. Among these solvents, the solvent is preferably methanol, more preferably methanol of which the moisture content is controlled to 0.001 to 1% by mass, more preferably methanol of which the moisture content is controlled to 0.003 to 0.9% by mass, and particularly preferably methanol of which the moisture content is controlled to 0.005 to 0.8% by mass. Examples of the washing solution include methanol, acetone, methyl acetate, ethyl acetate, hexane, water and the like, and among them, the washing solution is more preferably methanol, methyl acetate or water, as alone or a mixed solution thereof.

The amount of the washing solution is set up so as to meet the content ratio of the alkali metal, but is generally preferably 300 to 10000 parts by mass, and more preferably 500 to 5000 parts by mass with respect to 100 parts by mass of the PVA. The washing temperature is preferably 5 to 80°C, and more preferably 20 to 70°C. The washing time is preferably 20 minutes to 100 hours, and more preferably 1 hour to 50 hours.

The content ratio of the alkali metal in PVA used in the invention is preferably 0.00001 to 1 part by mass, and more preferably 0.0001 to 0.1 parts by mass with respect to 100 parts by mass of the PVA. It is difficult to industrially manufacture those in which the content ratio of the alkali metal is less than 0.00001 parts by mass. In addition, when the content of the alkali metal is more than 1 part by mass, the content of the alkali metal remaining in the obtained polyvinyl acetal resin increases, and stable melt molding may be impossible due to the decomposition or gelation. Meanwhile, examples of the alkali metal include sodium, potassium and the like. In addition, the content of the alkali metal may be calculated with atomic absorption spectrometry.

Next, a method of manufacturing the polyvinyl acetal resin will be explained.

The aldehyde used in the manufacture of the polyvinyl acetal resin is not particularly limited. Examples of the aldehyde include formaldehyde (including para-formaldehyde), acetaldehyde (including para-acetaldehyde), propionaldehyde, butyl aldehyde, n-octyl aldehyde, amyl aldehyde, hexyl aldehyde, heptyl aldehyde, 2-ethylhexyl aldehyde, cyclohexyl aldehyde, furfural, glyoxal, glutar aldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, β-phenylpropionaldehyde and the like. These aldehydes may be used alone, or may be used in combination of two kinds or more. Among

these aldehydes, those having butyl aldehyde as a primary component are preferable from the viewpoint of easiness of the manufacture.

A polyvinyl acetal resin obtained by performing acetalization of the polyvinyl alcohol resin with aldehydes having butyl aldehyde as a primary component is particularly called polyvinyl butyral. A polyvinyl butyral in which the ratio of the butyral unit (see the formula below) among the acetal units existing in the polyvinyl acetal resin is more than 0.9, is preferable in the invention. Specifically, when $R^1 = C_3H_7$ (the alkyl group of butyl aldehyde) in the structural formula of the polyvinyl acetal resin illustrated in Chemical formula (1), $k_{(1)}/(k_{(1)} + k_{(2)} + \cdots + k_{(n)}) > 0.9$ is preferable.

The reaction of the polyvinyl alcohol resin and the aldehyde (acetalization reaction) may be performed with a known method. Examples of the known method include water solvent method in which an aqueous solution of the polyvinyl alcohol resin and the aldehyde are subjected to acetalization reaction in the presence of an acid catalyst whereby to precipitate resin particles; solvent method in which the polyvinyl alcohol resin is dispersed in an organic solvent, and subjected to acetalization reaction with the aldehyde in the presence of an acid catalyst, and precipitates the polyvinyl acetal resin from this reaction liquid by water or the like that is a poor solvent with respect to the polyvinyl acetal resin; and the like.

The above-mentioned acid catalyst is not particularly limited, and examples thereof include organic acids such as acetic acid and p-toluene sulfonic acid; inorganic acids such as nitric acid, sulfuric acid and hydrochloric acid; gas that exhibits the acidity at being made to an aqueous solution such as carbonic acid gas, solid acid catalysts such as a cation exchanger and metal oxide, and the like.

The acetalization degree of the polyvinyl acetal resin used in the invention, namely, the ratio (mol%) of the sum of the acetalized vinyl alcohol units with respect to the total repeating units is 65 to 88 mol%, preferably 70 to 86 mol%, more preferably 72 to 86 mol%, and further preferably 75 to 84 mol%. A polyvinyl acetal resin having less than 65 mol% of the acetalization degree has insufficient thermal stability, and poor melt processibility. A polyvinyl acetal resin having more than 88 mol% of the acetalization degree is very difficult to manufacture, and the manufacture cost increases since the acetalization reaction takes a long time. Meanwhile, the acetalization degree of the polyvinyl acetal resin (mol%) can be defined with the formula (ii) below.

[Math. 2]

$$\text{Acetalization degree (mol\%)} = \{k_{(1)} + k_{(2)} + \cdots + k_{(n)}\}/\{k_{(1)} + k_{(2)} + \cdots + k_{(n)} + l + m\} \times 100 \quad \text{(ii)}$$

The acetalization degree of the polyvinyl acetal resin may be obtained according to the method described in JIS K6728 (year 1977), by obtaining the mass ratio ($l_0$) of the vinyl alcohol unit and the mass ratio ($m_0$) of the vinyl acetate unit with titration, obtaining the mass ratio ($k_0$) of the vinyl acetal unit with $k_0 = 1 - l_0 - mo$, computing the mol ratio (1) of the vinyl alcohol unit and the mol ratio (m) of the vinyl acetate unit from this, computing the mol ratio ($k = k_{(1)} + k_{(2)} + \cdots + k_{(n)}$) of the vinyl acetal unit from the calculation formula of k = 1 - 1 - m, and obtaining the acetalization degree from the acetalization degree (mol%) = $\{k_{(1)} + k_{(2)} + \cdots + k_{(n)}\}/\{k_{(1)} + k_{(2)} + \cdots + k_{(n)}+l+m\}x100$; or may be calculated by measuring $^1$H-NMR or $^{13}$C-NMR for the polyvinyl acetal resin as dissolved in deuterated dimethyl sulfoxide.

The ratio of acetalization with butyl aldehyde is particularly called the butyralization degree. When $R^1 = C_3H_7$ (the alkyl group of the butyl aldehyde) in the structural formula of the polyvinyl acetal illustrated in Chemical formula (1), the butyralization degree is defined with General formula (iii).

[Math. 3]

$$\text{Butyralization degree (mol\%)} = k_{(1)}/\{k_{(1)} + k_{(2)} + \cdots + k_{(n)} + l + m\} \times 100 \quad \text{(iii)}$$

For the polyvinyl butyral resin used in the invention, the butyralization degree is preferably 65 to 83 mol%, and further preferably 70 to 83 mol%. Specifically, $0.65 \leq k_{(1)} \leq 0.83$ is preferable, and $0.70 \leq k_{(1)} \leq 0.83$ is further preferable. When a polyvinyl acetal resin having the above-mentioned range of the butyralization degree is used, it is possible to easily and cheaply obtain a molded product that is excellent in mechanical properties, particularly toughness.

In addition, a resin that comprises repeating units represented by Chemical formula (2) is also encompassed in the polyvinyl acetal resin of the invention.

[Chemical formula 2]

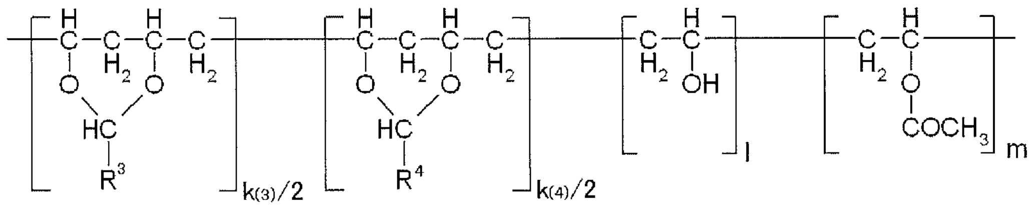

(2)

In Chemical formula (2), $R^3$ is a hydrocarbon group derived from an aldehyde having three or less carbon atoms used in the acetalization reaction, or a hydrogen atom, $R^4$ is a hydrocarbon group derived from an aldehyde having four or more carbon atoms used in the acetalization reaction (meanwhile, the carbon number of $R^3$ and $R^4$ of the hydrocarbon group is the integer i obtained by subtracting 1 from the carbon number of the aldehydes used in the acetalization reaction. When i is zero, $R^3$ is a hydrogen atom. Namely, $R^3$ is a hydrocarbon group having two or less carbon atoms, $R^4$ is a hydrocarbon group having three or more carbon atoms. Herein, $R^3$ and $R^4$ are concepts including all hydrocarbyl groups, and may be saturated or unsaturated, and may be circular, linear or branched. In addition, $R^3$ and $R^4$ may be modified with a functional group containing an oxygen atom such as a hydroxyl group and a carboxyl group, or a functional group containing the other atom, and the like.), $k_{(3)}$ is the molar ratio of a vinyl alcohol unit acetalized with an aldehyde having three or less carbon atoms, $k_{(4)}$ is the molar ratio of a vinyl alcohol unit acetalized with an aldehyde having four or more carbon atoms, 1 is the molar ratio of a vinyl alcohol unit that is not acetalized, and m is the molar ratio of a vinyl acetate unit. However, $k_{(4)}$ and m may be zero. Each unit is not limited to the sequence of the arrangement illustrated in Chemical formula (2), but may be arranged randomly, may be arranged in a block structure, or may be arranged in a taper structure.

Next, a method of manufacturing a polyvinyl acetal resin containing the repeating units represented by Chemical formula (2) will be explained. The polyvinyl acetal resin containing the repeating units represented by Chemical formula (2) may be obtained by reacting the PVA and the aldehyde described above.

Examples of the aldehyde having three or less carbon atoms being used in the manufacture of the polyvinyl acetal resin containing the repeating units represented by Chemical formula (2) include formaldehyde (including para-formaldehyde), acetaldehyde (including para-acetaldehyde) and propionaldehyde. These aldehydes having three or less carbon atoms may be used alone in one kind, or may be used in combination of two kinds or more. Among these aldehydes having three or less carbon atoms, those having acetaldehyde and formaldehyde (including para-formaldehyde) as a primary component are preferable, and acetaldehyde is particularly preferable from the viewpoint of the manufacture easiness and the heat resistance.

Examples of the aldehyde having four or more carbon atoms being used in the manufacture of the polyvinyl acetal resin containing the repeating units represented by Chemical formula (2) include butyl aldehyde, isobutyl aldehyde, n-octyl aldehyde, amyl aldehyde, hexyl aldehyde, heptyl aldehyde, 2-ethylhexyl aldehyde, cyclohexyl aldehyde, furfural, glyoxal, glutar aldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, β-phenylpropionaldehyde and the like. These aldehydes having four or more carbon atoms may be used alone in one kind, or may be used in combination of two kinds or more. Among these aldehydes having four or more carbon atoms, those having butyl aldehyde as a primary component is preferable from the viewpoint of the manufacture easiness. In addition, the combination of the aldehyde having four or more carbon atoms and the aldehyde having three or less carbon atoms, used in the manufacture of the polyvinyl acetal resin, is preferably butyl aldehyde and acetaldehyde from the viewpoint of the manufacture easiness, the heat resistance and the mechanical properties.

In the polyvinyl acetal resin containing the repeating units represented by Chemical formula (2), the sum of the acetalized vinyl alcohol units is 65 to 88 mol%, preferably 70 to 86 mol%, more preferably 72 to 86 mol%, and further preferably 75 to 84 mol% with respect to the total repeating units. A polyvinyl acetal resin having less than 65 mol% of the sum of the acetalized vinyl alcohol units with respect to the total repeating units has insufficient thermal stability, and poor melt processibility. On the other hand, a polyvinyl acetal resin having more than 88 mol% of the sum of the acetalized vinyl alcohol units is very difficult to manufacture, and the manufacture cost increases since the acetalization reaction takes a long time. Meanwhile, a unit including two carbons (for example, the vinyl alcohol unit, the vinyl acetate unit, ethylene unit and the like) of the primary chain in the polyvinyl alcohol resin, which is a raw material for manufacture of the polyvinyl acetal resin, is taken as one repeating unit in computing the mol% of the repeating unit. For example, for the polyvinyl acetal resin illustrated in Chemical formula (2), mol% ($k_{(AA)}$) of the vinyl alcohol unit acetalized with an aldehyde having three or less carbon atoms is obtained from the formula: $k_{(3)}/\{k_{(3)} + k_{(4)} + 1 + m\} \times 100$; mol% ($k_{(BA)}$) of the vinyl alcohol unit acetalized with an aldehyde having four or more carbon atoms is obtained from the formula: $k_{(4)}/\{k_{(3)} + k_{(4)} + l + m\} \times 100$; mol% ($k_{(VA)}$) of the vinyl alcohol unit that is not acetalized is obtained from the formula:

$l/\{k_{(3)} + k_{(4)} + 1 + m\}$ x 100; and mol% ($k_{(AV)}$) of the vinyl acetate unit is obtained from the formula: $m/\{k_{(3)} + k_{(4)} + l + m\}$ x 100 with respect to the total repeating units $\{k_{(3)} + k_{(4)} + 1 + m\}$.

For the polyvinyl acetal resin containing the repeating units represented by Chemical formula (2), the molar ratio of a vinyl alcohol unit acetalized with an aldehyde having four or more carbon atoms/a vinyl alcohol unit acetalized with an aldehyde having three or less carbon atoms is 90/10 to 0/100, preferably 80/20 to 0/100, more preferably 50/50 to 0/100, and particularly preferably 40/60 to 1/99 from the viewpoint of the mechanical properties and the heat resistance. With use of such polyvinyl acetal resin, it is possible to obtain a molded product that is excellent in the mechanical properties and the heat resistance while maintaining the merits originally possessed by the polyvinyl acetal resin such as the strength and elastic modulus, the surface hardness, the surface smoothness and the transparency.

The reaction of the polyvinyl alcohol resin and the aldehyde (acetalization reaction) may be performed with a known method. Examples of the known method include water solvent method in which an aqueous solution of the polyvinyl alcohol resin and the aldehyde are subjected to acetalization reaction in the presence of an acid catalyst whereby to precipitate resin particles; solvent method in which the polyvinyl alcohol resin is dispersed in an organic solvent, and subjected to acetalization reaction with the aldehyde in the presence of an acid catalyst, and precipitates the polyvinyl acetal resin from this reaction liquid by water or the like that is a poor solvent with respect to the polyvinyl acetal resin; and the like.

The aldehydes used in acetalization may be incorporated in all at the same time, or may be incorporated separately for each kind. The randomness of the vinyl acetal unit in the polyvinyl acetal resin can be changed by changing the sequence of the addition of the aldehydes and the sequence of the addition of the acid catalyst.

In addition, the above-mentioned acid catalyst is not particularly limited, and examples thereof include organic acids such as acetic acid and p-toluene sulfonic acid; inorganic acids such as nitric acid, sulfuric acid and hydrochloric acid; gas that exhibits the acidity at being made to an aqueous solution such as carbonic acid gas, solid acid catalysts such as a cation exchanger and metal oxide, and the like.

The total acetalization degree of the polyvinyl acetal resin containing the repeating units represented by Chemical formula (2) may be obtained according to the method described in JIS K6728 (year 1977), by obtaining the mass ratio ($l_0$) of the vinyl alcohol unit that are not acetalized and the mass ratio (mo) of the vinyl acetate unit with titration, obtaining the mass ratio (ko) of the acetalized vinyl alcohol unit from ko = 1 - $l_0$ - mo, computing the mol ratio (1) of the vinyl alcohol unit that are not acetalized and the mol ratio (m) of the vinyl acetate unit from this, computing the mol ratio (k) of the acetalized vinyl alcohol unit from the calculation formula of k = 1-l-m, and obtaining the total acetalization degree by the total acetalization degree (mol%) = $k/\{k + l + m\}$ x 100; or may be calculated by measuring $^1$H-NMR or $^{13}$C-NMR for the polyvinyl acetal resin as dissolved in deuterated dimethyl sulfoxide.

As described above, the molar ratio of the vinyl alcohol unit acetalized with butyl aldehyde is particularly called the butyralization degree. In addition, the molar ratio of the vinyl alcohol unit acetalized with acetaldehyde is particularly called the acetoacetalization degree. Furthermore, the molar ratio of the vinyl alcohol unit acetalized with formaldehyde is called the formalization degree. For example, in the polyvinyl acetal resin obtained by acetalization of the polyvinyl alcohol resin with butyl aldehyde, acetaldehyde and formaldehyde, the butyralization degree is obtained with the formula: $k_{(BA)}/\{k_{(BA)} + k_{(AA)} + k_{(FA)} + l + m\}$ x 100 when the molar ratio of the vinyl alcohol unit acetalized with butyl aldehyde is $k_{(BA)}$, the molar ratio of the vinyl alcohol unit acetalized with acetaldehyde is $k_{(AA)}$, the molar ratio of the vinyl alcohol unit acetalized with formaldehyde is $k_{(FA)}$, the molar ratio of the vinyl alcohol unit that is not acetalized is 1, and the molar ratio of the vinyl acetate unit is m. The acetoacetalization degree is obtained with the formula: $k_{(AA)}/\{k_{(BA)} + k_{(AA)} + k_{(FA)} + 1 + m\}$ x 100. The formalization degree is obtained with the formula: $k_{(FA)}/\{k_{(BA)} + k_{(AA)} + k_{(FA)} + 1 + m\}$ x 100.

The polyvinyl acetal resin of the invention is obtained by acetalization of PVA having a saponification degree of 99.5 mol% or more, and thus the content of the vinyl ester unit thereof is 0.5 mol% or less. The content of the vinyl ester unit of the polyvinyl acetal resin is 0.5 mol% or less, preferably 0.3 mol% or less, and particularly preferably 0.1 mol% or less. When the content of the vinyl ester unit is more than 0.5 mol%, the polyvinyl acetal resin has insufficient thermal stability, and it may be difficult to perform stable melt molding due to the thermal decomposition and the cross-linking gelation.

In addition, the polymerization degree of a polyvinyl acetal resin obtained by acetalization of a polyvinyl alcohol resin is the same as that of the polyvinyl alcohol resin since the polymerization degree does not change with the acetalization. Since polyvinyl acetal resin of the invention is obtained by acetalization of PVA having 500 to 2000 of the polymerization degree, the polymerization degree thereof is also 500 to 2000. The polymerization degree of the polyvinyl acetal resin is preferably 800 to 1700, and more preferably 1000 to 1500. If the polymerization degree of the polyvinyl acetal resin is less than 500, the mechanical properties of the polyvinyl acetal resin may be insufficient, and particularly the toughness may be insufficient. If the polymerization degree is more than 2000, the melt viscosity at the time of the thermoforming increases, and the manufacture of a molded product becomes difficult.

The slurry produced in the water solvent method, the solvent method and the like generally exhibits the acidity by the acid catalyst. The pH of the slurry at manufacturing the polyvinyl acetal resin of the invention is preferably adjusted from 6 to 8, and more preferably to 6.5 to 7.5. When the pH of the slurry is less than 6, the decomposition or the cross-linking of the polyvinyl acetal resin may occur due to the acid, and a stable molded article may not be obtained. On the other hand, when the pH of the slurry is more than 8, the polymer deterioration may proceed, and the coloration of the molded article, and the like may be caused.

Examples of the method of adjusting the pH include a method in which water washing of the slurry is repeated to adjust the pH, a method in which a neutralizer is added to the slurry to adjust the pH, a method in which alkylene oxides and the like are added, and the like.

In addition, examples of the above-mentioned neutralizer include alkali metal compounds such as sodium hydroxide, potassium hydroxide, sodium acetate, sodium carbonate, sodium hydrocarbonate and potassium carbonate, alkali earth metal compounds such as calcium hydroxide, ammonia, and an aqueous solution of ammonia. Examples of the alkylene oxides include ethylene oxide, propylene oxide; glycidyl ethers such as ethylene glycol diglycidyl ether and the like.

Next, the influences of the residual catalyst and the residue of the neutralizer, the unreacted aldehyde, the by-products and the like will be described.

If the above-mentioned residues remain in large quantities in the polyvinyl acetal resin, it may cause the polymer deterioration, and stable thermoforming may not be performed. Particularly, the alkali metal or alkali earth metal contained in the compound used as the neutralizer may easily cause the thermal decomposition, and may cause violent polymer decomposition or cross-linking gelation when it remains in large quantities, and thus stable melt molding may not be performed. Specifically, the content of the alkali metal or alkali earth metal in the polyvinyl acetal resin is 0.1 to 50 ppm, preferably 0.1 to 10 ppm, and particularly preferably 0.1 to 1 ppm. Meanwhile, those having less than 0.1 ppm of the content of the alkali metal or alkali earth metal are difficult to manufacture industrially, and the manufacture cost increases since the washing takes a long time.

A method of removing the above-mentioned residues is not particularly limited. As the washing solution, water, a mixed solution in which alcohol such as methanol and ethanol is added to water, and the like are used. A method of repeating deliquoring and washing, or the like is generally used. Particularly, the method of removing the residue is preferably a method in which the polyvinyl acetal resin is neutralized, and then deliquoring and washing are repeated until pH becomes 6 to 8, preferably 6.5 to 7.5 with a mixed solution of water/alcohol (methanol, ethanol and the like), in terms that the alkali metal or alkali earth metal can be effectively lowered, and the polyvinyl acetal resin of the invention can be stably manufactured. The mixing ratio of water/alcohol is preferably 50/50 to 95/5, and more preferably 60/40 to 90/10 in the mass ratio. If the water ratio is less than 50/50, the elution of the polyvinyl acetal resin into the mixed solution may increase. If the water ratio is more than 95/5, there are tendencies that the alkali metal or alkali earth metal cannot be removed effectively, and it becomes difficult to obtain the polyvinyl acetal resin of the invention, and stable thermoforming cannot be performed.

The polyvinyl acetal resin in the hydrated state, from which the residue and the like are removed, is dried as necessary, and processed into powder shape, granule shape or pellet shape as necessary, and offered as a material for molding. The unreacted aldehyde, the moisture and the like are preferably lowered by deaeration under reduced pressure at the processing into the powder shape, the granules shape or the pellet shape.

In addition, the moisture content of the polyvinyl acetal resin of the invention is preferably adjusted from 0.005% to 2%, more preferably to 0.01 to 1%. Those having less than 0.005% of the moisture content is difficult to manufacture, and may have decline of the qualities such as occurrence of the coloration since it undergoes excessive thermal history. On the other hand, if the moisture content is more than 2%, it may be difficult to perform stable thermoforming with a general molding method. Meanwhile, the moisture content is measured with Carl Fischer method.

Furthermore, the primary dispersion peak temperature $T\alpha$ of the polyvinyl acetal resin of the invention measured at the conditions of 10 Hz of a sine wave vibration and 3°C/min of the temperature rise speed is preferably 85°C to 125°C, and more preferably 90°C to 120°C. If $T\alpha$ is lower than 85°C, it may be difficult to provide a molded product that is excellent in the heat resistance. On the other hand, if $T\alpha$ is higher than 125°C, the molding processability may decline, and the use range may be limited.

The polyvinyl acetal resin for thermoforming of the invention may be blended with various additives, for example, an antioxidant, a stabilizer, a lubricant, a processing aid, an antistatic agent, a colorant, an impact resistance aid, a foaming agent, a filler, a delustering agent and the like as necessary. Meanwhile, it is preferable that a softener or a plasticizer is not contained in large quantities from the viewpoint of the mechanical properties and the surface hardness of the obtained molded product or film.

The plasticizer contained in the polyvinyl acetal resin for thermoforming of the invention is
10 parts by mass or less with respect to 100 parts by mass of the polyvinyl acetal resin. In addition, a plasticizer is more preferably not contained in the polyvinyl acetal resin. If the plasticizer is more than 20 parts by mass, the plasticizer bleeds out, and easily has bad influence on the obtained molded article or film. As the plasticizer contained in the polyvinyl acetal resin for thermoforming of the invention, carboxylic acid ester-based plasticizers such as monovalent carboxylic acid ester-based plasticizers and multivalent carboxylic acid ester-based plasticizers, phosphoric acid ester-based plasticizers, organic phosphoric acid ester-based plasticizers, and the like, and in addition, macromolecular plasticizers such

as carboxylic acid polyester-based plasticizers, carbonic acid polyester-based plasticizers and polyalkylene glycol-based plasticizers can be used. These plasticizers may be used in alone, or used in combination of two kinds or more. Particularly, the plasticizer is preferably triethylene glycol di 2-ethylhexanoate, triethylene glycol di 2-ethylbutyrate, triethylene glycol di n-heptanoate, tetraethylene glycol di 2-ethylhexanoate or tetraethylene glycol n-heptanoate in terms of excellent plasticization effects.

Furthermore, an ultraviolet absorber may be added for the purpose of improving the weather resistance. The kind of the ultraviolet absorber is not particularly limited, but is preferably benzotriazole-based, benzophenone-based, or triazine-based ultraviolet absorber. The addition amount of the ultraviolet absorber is generally 0.1 to 10% by mass, preferably 0.1 to 5% by mass, and more preferably 0.1 to 2% by mass with respect to the polyvinyl acetal resin for thermoforming.

The polyvinyl acetal resin for thermoforming of the invention is used as a molding material of, for example, powder shape or pellet shape. Thus, using this molding material, various formed objects may be manufactured by performing a known molding method such as extrusion molding, injection molding, vacuum molding, compressed air molding, blow molding, transfer molding, rotation molding, powder slash and the like.

Furthermore, the polyvinyl acetal resin for thermoforming of the invention may be also kneaded and used in the melt state with other resins using a known kneading machine such as a single-screw extruder, a twin-screw extruder, Banbury mixer, Brabender, an open roll and a kneader. Among these kneading machines, the twin-screw extruder is preferable in terms of excellent productivity and obtaining great shearing force.

When the polyvinyl acetal resin for thermoforming of the invention is used in the melt kneading with other resins, specific examples of the other resins may include aromatic polyesters such as polyethylene terephthalate, polytrimethylene terephthalate, polybutylene terephthalate and polyhexamethylene terephthalate, and copolymers thereof; aliphatic polyesters such as polylactic acid, polyethylene succinate, polybutylene succinate, polybutylene succinate adipate, polyhydroxy butyrate-polyhydroxy valerate copolymer and polycaprolactone, and copolymers thereof; aliphatic polyamides such as Nylon 6, Nylon 66, Nylon 610, Nylon 10, Nylon 12 and Nylon 6-12, and copolymers thereof; polyolefins such as polypropylene, polyethylene, polybutene and polymethylpentene, and copolymers thereof; polystyrene-based, polydiene-based, chlorine-based, polyolefin-based, polyester-based, polyurethane-based, polyamide-based and fluorine-based elastomers; polyalkyl methacrylates such as methyl methacrylate, ethyl methacrylate, propyl methacrylate, isopropyl methacrylate, n-butyl methacrylate, sec-butyl methacrylate and tert-butyl methacrylate, and copolymers thereof; polyoxymethylene and copolymers thereof; polyvinyl alcohols and ethylene-vinyl alcohol copolymers; and the like. The ratio of the polyvinyl acetal resin with respect to the sum of the polyvinyl acetal resin and the other resin when the polyvinyl acetal resin is kneaded with the other resin, is preferably 1% by mass or more, and more preferably 5% by mass or more. If the ratio of the polyvinyl acetal resin is less than 1% by mass, the physical properties possessed by the polyvinyl acetal resin are hardly obtained, and the blending effects of the polyvinyl acetal resin tend to decline.

In addition, the polyvinyl acetal resin for thermoforming of the invention allows obtaining a film and a molded product that are excellent in the transparency and the mechanical properties by melt extrusion molding method or injection molding method such as T-die method, calendaring, inflation method or the like. Particularly, in order to obtain a film-shape formed object, T-die method is preferably used from the viewpoint of the economy and the like.

The temperature of the resin at which the melt extrusion is performed, is preferably 150 to 250°C. After the melt extrusion, the formed object is preferably rapidly cooled. For example, a film-shape formed object immediately after being extruded is preferably rapidly cooled by being contacted with a cooling roll.

The film obtained from the polyvinyl acetal resin for thermoforming of the invention may be a monolayer film, or may be a laminated body with other resins or bases. In the laminated body, a film including the polyvinyl acetal resin for thermoforming of the invention may be used as the inner layer or a portion thereof, or may be used in the outermost layer. The number of the laminations of the film is not particularly limited.

A method of manufacturing the laminated body is not particularly limited, but examples thereof include a method in which a multilayer film is directly manufactured by co-extrusion method, a method in which a film prepared as a monolayer, is pasted, and the like.

The polyvinyl acetal resin for thermoforming of the invention may be applied to various molded products. Examples of the use include signboard components or marking films of an advertising tower, a stand signboard, a side signboard, a transom signboard and a roof signboard, and the like; display components of a showcase, a partition panel, a store display and the like; lamp components such as a fluorescent lamp cover, a mood lamp cover, a lampshade, a luminous ceiling, a luminous wall and a chandelier; interior components of furniture, a pendant, a mirror and the like; building components of a door, a dome, a safety window glass, a partition wall, a staircase wainscot panel, a balcony wainscot panel, the roof of a building for leisure and the like; transport-related components of an airplane windshield, a pilot visor, a motorcycle, a motor boat windshield, a light shield for bus, a side visor, a rear visor, a head wing and a headlight cover for an automobile, interior members for an automobile, exterior members for an automobile such as a bumper and the like; electronic device components of a nameplate for acoustic imaging, a stereo cover, a television protection mask, a vending machine, a cellular phone, a personal computer and the like; medical device components

of an infant incubator, a roentgen component and the like; device-related components of a machine cover, a gauge cover, an experiment device, a ruler, a name plate, an observation window and the like; optics-related components and the like such as a liquid crystal protection plate, a light guide plate, a light guide film, Fresnel lens, lenticular lens, a front plate of various displays and a diffusion plate; traffic-related components and the like such as a road marker, a guide plate, a curve mirror and a soundproof wall; and a greenhouse, a large-scale water bath, a box water bath, a bathroom member, a clock panel, a bathtub, a sanitary, a desk mat, a sport component, a toy, a mask for face protection at the time of welding; surface materials and the like that are used in a personal computer, a cellular phone, furniture, a vending machine, a bathroom member and the like.

EXAMPLES

Next, the invention will be specifically explained with Examples, but the invention is not limited to these Examples.

[Analysis method for polyvinyl acetal resin]

(1) Acetalization degree

The acetalization degree was measured in accordance with JIS-K6728 (year 1977). First, the mass ratio ($l_0$) of the vinyl alcohol unit and the mass ratio (mo) of the vinyl acetate unit were obtained by the method described below, and furthermore, the mass ratio (ko) of the vinyl acetal unit was obtained from ko = 1 - $l_0$ - mo.

Next, 1 = ($l_0$/44.1)/($l_0$/44.1 + mo/86.1 + 2ko/Mw(acetal) and m = (mo/44.1)/($l_0$/44.1 + $m_0$/86.1 + 2$k_0$/Mw(acetal) were obtained by the computation, the ratio of the vinyl acetal unit (k = $k_{(1)}$ + $k_{(2)}$ + ... + $k_{(n)}$) was computed from the calculation formula of k = 1 - 1 - m, and finally, the acetalization degree was obtained from the acetalization degree (mol%) = {$k_{(1)}$ + $k_{(2)}$ + ... + $k_{(n)}$}/{$k_{(1)}$ + $k_{(2)}$ + ... + $k_{(n)}$ + l + m} x 100.

Herein, Mw (acetal) is the molecular weight per one acetalization unit, and for example, Mw(acetal) = Mw(butyral) = 142.2 in the case of polyvinyl butyral.

In addition, when butyl aldehyde is co-acetalized with other aldehydes, $^1$H-NMR or $^{13}$C-NMR is measured, and the acetalization degree (mol%) can be calculated, respectively.

(2) Mass ratios of vinyl alcohol unit and vinyl acetate unit ($l_0$ and mo)

About 0.4 g of the polyvinyl acetal resin was weighed exactly into a stopper-equipped Erlenmeyer flask, and dissolved with addition of 10 mL of a mixed solution of pyridine/anhydrous acetic acid (92/8 volume ratio) with a pipette, and the reaction system was heated for 120 minutes on a water bath of 50°C temperature as attached with a cooler. After the cooling, the reaction system was added with 20 mL dichloroethane, and well stirred and mixed, and further added with 50 mL water, capped and violently stirred and mixed, and then stood for 30 minutes. The produced acetic acid was titrated with N/2 sodium hydroxide solution with violently mixing and stirring until it exhibited pale red using phenolphthalein as an indicator, and the titration amount thereof was taken as a (mL). The blank test was performed separately, and the titration amount of the N/2 sodium hydroxide solution demanded for this was taken as b (mL). $l_0$ was obtained from the following General formula (iv).
[Math. 4]

$$l_0 = 2.2 \times (b - a) \times F_1 / (s_1 \times P_1) \qquad (iv)$$

In General formula (iv), $s_1$ is the mass of the polyvinyl acetal resin, $P_1$ is the fineness (%), and $F_1$ is the titer of N/2 sodium hydroxide solution.

In addition, about 0.4 g of the polyvinyl acetal resin was exactly weighed into a stopper-equipped Erlenmeyer flask, and dissolved with addition of 25 mL ethanol at 85°C. The reaction system was added with 5 mL N/10 sodium hydroxide solution with a pipette with well mixing and stirring, and refluxed for 60 minutes in a water bath of 85°C temperature as attached with a cooler. After the cooling, the reaction system was added with 5 mL N/ 10 hydrochloric acid with a pipette, and well stirred and mixed, and stood for 30 minutes. The excessive hydrochloric acid was titrated with N/10 sodium hydroxide solution until it exhibited pale red using phenolphthalein as an indicator, and the titration amount thereof was taken as c (mL). The blank test was performed separately, and the titration amount of N/10 sodium hydroxide solution demanded for this was taken as d (mL). $m_0$ was obtained from the following General formula (v).
[Math. 5]

$$m_0 = 0.86 \times (c - d) \times F_m / (s_m \times P_m) \qquad (v)$$

In General formula (v), $s_m$ is the mass of the polyvinyl acetal resin, $P_m$ is the fineness (%), and $F_m$ is the titer of N/10 sodium hydroxide solution.

(3) Content of alkali metal or alkali earth metal

The polyvinyl acetal resin was carbonized with a platinum crucible and a hot plate, and subsequently incinerated with an electric furnace, and the residue was dissolved in an acid, and the content of alkali metal or alkali earth metal was measured using atomic absorption spectrometry.

[Analysis method for film of polyvinyl acetal resin]

(4) YI, visible light transmittance

The visible light transmittance was measured for a film of 100 μm thickness using U-4100, a spectrophotometer manufactured by Hitachi High-Technologies Corporation. The visible light transmittance was measured at 380 to 780 nm of the wavelength, and calculated in accordance with JIS-R3106.

(5) Haze

The haze was measured in accordance with JIS-K7136 for a film of 100 μm thickness.

(6) Number of particle

The number of particles derived from the polyvinyl acetal resin was counted for a film of 100 μm thickness and 10 cm x 10 cm size using a polarization microscope and a fluorescence microscope.

(7) Molding property

Evaluation of whether a film can be successively stably manufactured or not, was performed from the viewpoints of the viscosity of the melt resin at the time of thermoforming, the strength of the obtained film, and the like.

Example 1

A polyvinyl alcohol resin (500 g) having 1000 of the polymerization degree and 99.5 mol% of the saponification degree was dissolved in pure water (5250 g) with heating, and cooled to 12°C. Then, the reaction system was added with 60% by mass of nitric acid (365 g) and butyl aldehyde (269 g), and was maintained for two hours whereby to precipitate the reaction product. Then, the reaction system was maintained at 45°C for three hours to complete the reaction, washed until pH=6 with excessive water, and neutralized with an aqueous solution of sodium hydroxide. Then, the reaction system was washed repeatedly until pH=7 with a mixed solution of water/methanol = 80/20 (mass ratio), and dried until the moisture content became 1.0%, whereby to prepare the polyvinyl acetal resin. Meanwhile, the moisture content was measured with Carl Fischer method. The acetalization degree of the obtained polyvinyl acetal resin was 76 mol%, and the sodium content in the polyvinyl acetal resin was 5 ppm. Meanwhile, the acetalization degree was obtained with the method of (1) described above, and the sodium content was obtained with the method of (3) described above.

The above-mentioned polyvinyl acetal resin was melt-extruded at 220°C of the cylinder temperature, and 100 rpm of the screw rotation frequency using LABO PLASTOMILL (20 mm ϕ biaxial, L/D = 28) manufactured by Toyo Seiki Seisaku-sho. Ltd., whereby to prepare the pellets of the polyvinyl acetal resin. The obtained pellets were extrusion-molded at 220°C of the cylinder temperature and the T die temperature, and 20 rpm of the screw rotation frequency from T-die of 300 mm width using LABO PLASTOMILL (25 mm ϕ uniaxial, L/D = 28) manufactured by Toyo Seiki Seisaku-sho. Ltd., whereby to prepare a polyvinyl acetal resin film of 100 μm thickness.

The polyvinyl acetal resin film was evaluated for YI, visible light transmittance, and the haze with the methods of (4) and (5) described above and the results thereof are listed in Table 1. In addition, the film was collected after one hour and six hours from the start of the pellet input, and the number of the particles was counted with the method of (6) described above. The results are listed in Table 1. The film after six hours exhibited the increase of the particles, but the state of the film was good without change in comparison to the film after one hour of the start.

[Table 1]

| | Polyvinyl alcohol resin | | Polyvinyl acetal resin | | | | | | Film evaluation | | | | | |
|---|---|---|---|---|---|---|---|---|---|---|---|---|---|---|
| | Polymerization degree | Saponification degree (mol%) | Aldehyde | Acetalization degree (mol%) | Slurry pH | Alkali metal | | Plasticizer content (part by mass) | YI | Transmittance (%) | Haze (%) | Number of particle (Piece/10 cm x 10 cm) | | Moldability |
| | | | | | | Kind | (ppm) | | | | | After 1 hour | After 6 hours | |
| Example 1 | 1000 | 99.5 | Butyl aldehyde | 76 | 7 | Sodium | 5 | 0 | 0.4 | 92.6 | 0.1 | 8 | 11 | Good |
| Example 2 | 550 | 99.5 | Butyl aldehyde | 75 | 7 | Sodium | 4 | 0 | 0.4 | 92.3 | 0.2 | 7 | 9 | Good |
| Example 3 | 1700 | 99.6 | Butvl aldehyde | 78 | 7 | Sodium | 5 | 0 | 0.6 | 92.0 | 0.3 | 11 | 12 | Good |
| Example 4 | 1000 | 99.9 | Butyl aldehyde | 79 | 7 | Sodium | 7 | 0 | 0.4 | 92.4 | 0.1 | 5 | 8 | Good |
| Example 5 | 1000 | 99.5 | Butyl aldehyde | 85 | 7 | Sodium | 6 | 0 | 0.4 | 92.3 | 0.1 | 8 | 10 | Good |
| Example 6 | 1000 | 99.5 | Butyl aldehyde | 76 | 5 | Sodium | 5 | 0 | 0.5 | 91.9 | 0.2 | 10 | 12 | Good |
| Example 7 | 1000 | 99.5 | Butyl aldehyde | 76 | 9 | Sodium | 5 | 0 | 0.6 | 92.2 | 0.2 | 9 | 11 | Good |
| Example 8 | 1000 | 99.5 | Butyl aldehyde | 76 | 7 | Potassium | 6 | 0 | 0.4 | 92.5 | 0.1 | 9 | 12 | Good |
| Example 9 | 1000 | 99.5 | Butyl aldehyde | 76 | 7 | Sodium | 32 | 0 | 0.4 | 92.4 | 0.1 | 9 | 16 | Good |
| Example 10 | 1000 | 99.5 | Butyl aldehyde | 76 | 7 | Sodium | 0.3 | 0 | 0.3 | 92.5 | 0.1 | 7 | 9 | Good |
| Example 11 | 1000 | 99.5 | Butyl aldehyde | 76 | 7 | Sodium | 5 | 10 | 0.4 | 92.4 | 0.1 | 7 | 10 | Good |
| Comparative Example 1 | 360 | 99.6 | Butyl aldehyde | 74 | 7 | Sodium | 4 | 0 | 0.5 | 92.2 | 0.2 | 6 | - | Strength small, taking-over impossible |

(continued)

| | Polyvinyl alcohol resin | | Polyvinyl acetal resin | | | | | | Film evaluation | | | | | |
|---|---|---|---|---|---|---|---|---|---|---|---|---|---|---|
| | Polymerization degree | Saponification degree (mol%) | Aldehyde | Acetalization degree (mol%) | Slurry pH | Alkali metal | | Plasticizer content (part by mass) | YI | Transmittance (%) | Haze (%) | Number of particle (Piece/10 cm x 10 cm) | | Moldability |
| | | | | | | Kind | (ppm) | | | | | After 1 hour | After 6 hours | |
| Comparative Example 2 | 2400 | 99.5 | Butyl aldehyde | 77 | 7 | Sodium | 5 | 0 | 0.7 | 91.2 | 0.8 | 24 | - | Viscosity great, rotation in continuation impossible |
| Comparative Example 3 | 1000 | 98.5 | Butyl aldehyde | 76 | 7 | Sodium | 5 | 0 | 0.5 | 92.1 | 0.2 | 12 | 22 | Good |
| Comparative Example 4 | 1000 | 99.5 | Butyl aldehyde | 55 | 7 | Sodium | 8 | 0 | 0.8 | 91.3 | 0.7 | 17 | 49 | Good |
| Comparative Example 5 | 1000 | 99.5 | Butyl aldehyde | 76 | 7 | Sodium | 80 | 0 | 0.5 | 92.2 | 0.2 | 10 | 21 | Good |

Examples 2 to 4

The pellets and the films were molded, and the evaluations were performed in the same method as Example 1 except that the polyvinyl alcohol resins described in Table 1 were used instead of the polyvinyl alcohol resin used in Example 1, and the reaction conditions were suitably adjusted whereby to prepare the polyvinyl acetal resins listed in Table 1. The results are listed in Table 1.

Examples 5 to 10

The pellets and the films were molded, and the evaluations were performed in the same method as Example 1 except that the reaction conditions were suitably adjusted whereby to prepare the polyvinyl acetal resins listed in Table 1, and the polyvinyl acetal resins were used instead of the polyvinyl acetal resin used in Example 1. The results are listed in Table 1. Meanwhile, for Examples 5 and 8 to 10, the reaction system after the acetalization was washed until pH=6 with excessive water, and subsequently neutralized with an aqueous solution of sodium hydroxide, and washed until the pH became the desired pH with a mixed solution of water/methanol = 80/20 (mass ratio). For Example 6, the pH of the slurry of the polyvinyl acetal resin was adjusted to 5 by reducing the amount of the washing water and the aqueous solution of sodium hydroxide. On the other hand, for Example 7, the pH of the slurry of the polyvinyl acetal resin was adjusted to 9 by using an excessive amount of the aqueous solution of sodium hydroxide.

Example 11

10 Parts by mass of triethylene glycol di 2-ethylhexanoate was added as a plasticizer with respect to 100 parts by mass of the polyvinyl acetal resin obtained in Example 1. The polyvinyl acetal resin obtained by addition of the plasticizer was extrusion-molded at 220°C of the cylinder temperature and the T-die temperature, and 20 rpm of the screw rotation frequency from T-die of 300 mm width using LABO PLASTOMILL (25 mm $\phi$ uniaxial, L/D = 28) manufactured by Toyo Seiki Seisaku-sho. Ltd., whereby to prepare a polyvinyl acetal resin film of 100 $\mu$m thickness. For the prepared film, the evaluations were performed in the same manner as Example 1. The results are listed in Table 1.

Comparative examples 1 to 3

The pellets and the films were molded, and the evaluations were performed in the same method as Example 1 except that the polyvinyl alcohol resins described in Table 1 were used instead of the polyvinyl alcohol resin used in Example 1, and the reaction conditions were suitably adjusted whereby to prepare the polyvinyl acetal resins listed in Table 1. The results are listed in Table 1.

For Comparative example 1, a polyvinyl acetal resin was prepared using a polyvinyl alcohol resin having 360 of the polymerization degree. As results thereof, the strength of the film was small and the film was brittle, and thus it was not possible to take-over the resin stably, and to manufacture films in continuation. Reversely, for Comparative example 2, a polyvinyl acetal resin was prepared using a polyvinyl alcohol resin having 2400 of the polymerization degree. As results thereof, the viscosity of the melt resin was great, and it was not possible to stably discharge the resin from the T-die, and thus to continue take-over of the resin. Furthermore, the torque also slowly increased, and it was not possible to manufacture a film in continuation. In addition, for Comparative example 3, a polyvinyl acetal resin was prepared using a polyvinyl alcohol resin having 98.5 mol% of the saponification degree. As results thereof, the film after six hours had increase of the number of the particles, and the deteriorated state of the film in comparison to the film after one hour from the start.

Comparative examples 4 and 5

The pellets and the films were molded, and the evaluations were performed in the same method as Example 1 except that the reaction conditions were suitably adjusted whereby to prepare the polyvinyl acetal resins listed in Table 1, and the polyvinyl acetal resins were used instead of the polyvinyl acetal resin used in Example 1. The results are listed in Table 1.

For Comparative example 4, a polyvinyl acetal resin having 55 mol% of the acetalization degree was prepared. As results thereof, the film after six hours had drastic increase of the number of the particles, and the deteriorated state of the film in comparison to the film after one hour from the start. In addition, for Comparative Example 5, a polyvinyl acetal resin having 80 ppm of the sodium content was prepared. As results thereof, the film after six hours had drastic increase of the number of the particles, and the deteriorated state of the film in comparison to the film after one hour from the start.

[Analysis method for polyvinyl acetal resin]

(8) Composition

For the composition of the polyvinyl acetal resin, $^{13}$C-NMR spectrum was measured whereby to calculate mol% ($k_{(BA)}$) of the vinyl alcohol unit acetalized with an aldehyde having four or more carbon atoms with respect to the total repeating units and mol% ($k_{(AA)}$) of the vinyl alcohol unit acetalized with an aldehyde having three or less carbon atoms with respect to the total repeating units, mol% ($k_{(VA)}$) of the vinyl alcohol unit that is not acetalized with respect to the total repeating units, and mol% ($k_{(AV)}$) of the vinyl acetate unit with respect to the total repeating units.

(9) Primary dispersion peak temperature ($T\alpha$)

The primary dispersion peak temperature ($T\alpha$) of a loss tangent ($\tan\delta$) of a specimen having 20 mm length x 3 mm width x 200 $\mu$m thickness was measured using DVE RHEOSPECTOLER DVE-V4 manufactured by Rheology Co., Ltd. at the conditions of an inter-chuck distance of 10 mm, a sine wave vibration of 10 Hz, and a temperature rise speed of 3°C/min.

Example 12

A polyvinyl alcohol resin (500 g) having 1000 of the polymerization degree and 99.5 mol% of the saponification degree was dissolved in pure water (5250 g) with heating, and cooled to 12°C. Then, the reaction system was added with 60% by mass of nitric acid (365 g), butyl aldehyde (216 g), and acetaldehyde (27 g), and was maintained for two hours whereby to precipitate the reaction product. Then, the reaction system was maintained at 45°C for three hours to complete the reaction, washed until pH=6 with excessive water, and subsequently neutralized with an aqueous solution of sodium hydroxide. Then the reaction system was washed repeatedly with a mixed solution of water/methanol = 80/20 (mass ratio) until pH=7, and dried until the moisture content became 1.0%, whereby to prepare the polyvinyl acetal resin. Meanwhile, the moisture content was measured with Carl Fischer method. The acetalization degree of the obtained polyvinyl acetal resin was 78 mol%, $k_{(BA)}/k_{(AA)}$= 84/16, and the sodium content in the polyvinyl acetal resin was 5 ppm, and the primary dispersion peak temperature $T\alpha$ was 90°C. Meanwhile, the sodium content was obtained with the same method as Example 1, and the acetalization degree and the primary dispersion peak temperature $T\alpha$ were obtained with the methods of (8) and (9) described above, respectively.

The above-mentioned polyvinyl acetal resin was melt-extruded at 220°C of the cylinder temperature, and 100 rpm of the screw rotation frequency using LABO PLASTOMILL (20 mm $\phi$ biaxial, L/D = 28) manufactured by Toyo Seiki Seisaku-sho. Ltd., whereby to prepare the pellets of the polyvinyl acetal resin. The obtained pellets were extrusion-molded at 220°C of the cylinder temperature and the T-die temperature, and 20 rpm of the screw rotation frequency from T-die of 300 mm width using LABO PLASTOMILL (25 mm $\phi$ uniaxial, L/D = 28) manufactured by Toyo Seiki Seisaku-sho. Ltd., whereby to prepare a polyvinyl acetal resin film of 100 $\mu$m thickness.

For the polyvinyl acetal resin film, YI, visible light transmittance, and the haze were evaluated with the same method as Example 1 and the results thereof are listed in Table 2. In addition, the film was collected after one hour and after six hours from the start of the pellet input, and the number of the particles was counted with the same method as Example 1. The results are also listed in Table 2. The film after six hours exhibited increase of the particles, but the state of the film was good without change in comparison to the film after one hour from the start.

[Table 2]

| | Polyvinyl alcohol resin | | Polyvinyl acetal resin | | | | | | | | | Film evaluation | | | | | |
|---|---|---|---|---|---|---|---|---|---|---|---|---|---|---|---|---|---|
| | | | | Aldehyde | | | | Alkali metal | | | | | | | Number of particle (Piece/10 cm x 10 cm) | | |
| | Polymerization degree | Saponification degree (mol%) | Acetalization degree(mol%) | Carbon number 4 or more | Carbon number 3 or less | $k_{(BA)}/k_{(AA)}$ | Slurry pH | Kind | (ppm) | Plasticizer (part by mass) | Tα (°C) | YI | Transmittance (%) | Haze (%) | After 1 hour | After 6 hours | Moldability |
| Example 1 | 1000 | 99.5 | 76 | Butyl aldehyde | - | 100/0 | 7 | Sodium | 5 | 0 | 83 | 0.4 | 92.6 | 0.1 | 8 | 11 | Good |
| Example 12 | 1000 | 99.5 | 78 | Butyl aldehyde | Acetaldehyde | 84/16 | 7 | Sodium | 5 | 0 | 90 | 0.3 | 92.2 | 0.1 | 9 | 12 | Good |
| Example 13 | 1000 | 99.5 | 78 | Butyl aldehyde | Acetaldehyde | 62/38 | 7 | Sodium | 8 | 0 | 93 | 0.6 | 92.4 | 0.2 | 8 | 12 | Good |
| Example 14 | 1000 | 99.5 | 77 | Butyl aldehyde | Acetaldehyde | 36/64 | 7 | Sodium | 3 | 0 | 105 | 0.3 | 92.4 | 0.1 | 11 | 13 | Good |
| Example 15 | 1000 | 99.5 | 77 | - | Acetaldehyde | 0/100 | 7 | Sodium | 7 | 0 | 122 | 0.7 | 92.1 | 0.2 | 10 | 14 | Good |
| Example 16 | 1000 | 99.9 | 80 | Butyl aldehyde | Acetaldehyde | 36/64 | 7 | Sodium | 6 | 0 | 107 | 0.4 | 92.5 | 0.1 | 7 | 12 | Good |
| Example 17 | 1000 | 99.5 | 77 | Butyl aldehyde | Acetaldehyde | 36/64 | 7 | Sodium | 0.5 | 0 | 105 | 0.4 | 92.5 | 0.1 | 8 | 10 | Good |
| Comparative Example 6 | 1000 | 98.5 | 75 | Butyl aldehyde | Acetaldehyde | 35/65 | 7 | Sodium | 4 | 0 | 102 | 0.5 | 91.8 | 0.2 | 11 | 24 | Good |
| Comparative Example 7 | 1000 | 99.5 | 77 | Butyl aldehyde | Acetaldehyde | 36/64 | 7 | Sodium | 78 | 0 | 105 | 0.5 | 92.0 | 0.2 | 9 | 25 | Good |

Examples 13 to 15

The pellets and the films were molded, and the evaluations were performed in the same method as Example 12 except that the reaction conditions were suitably adjusted whereby to prepare the polyvinyl acetal resins listed in Table 2, and the polyvinyl acetal resins were used instead of the polyvinyl acetal resin used in Example 12. The results are listed in Table 2.

Example 16

The pellets and the films were molded, and the evaluations were performed in the same method as Example 12 except that the polyvinyl alcohol resin described in Table 2 was used instead of the polyvinyl alcohol resin used in Example 12, and the reaction conditions were suitably adjusted whereby to prepare the polyvinyl acetal resin listed in Table 2. The results are listed in Table 2.

Example 17

The pellets and the films were molded, and the evaluations were performed in the same method as Example 12 except that the reaction conditions were suitably adjusted whereby to prepare the polyvinyl acetal resin listed in Table 2, and the polyvinyl acetal resin was used instead of the polyvinyl acetal resin used in Example 12. The results are listed in Table 2.

Comparative example 6

The pellets and the films were molded, and the evaluations were performed in the same method as Example 12 except that the polyvinyl alcohol resin described in Table 2 was used instead of the polyvinyl alcohol resin used in Example 12, and the reaction conditions were suitably adjusted whereby to prepare the polyvinyl acetal resin listed in Table 2. The results are listed in Table 2.

For Comparative example 6, a polyvinyl acetal resin was prepared using a polyvinyl alcohol resin having 98.5 mol% of the saponification degree. As results thereof, the film after six hours had increase of the number of the particles, and the deteriorated state of the film in comparison to the film after one hour from the start.

Comparative example 7

The pellets and the films were molded, and the evaluations were performed in the same method as Example 12 except that the reaction conditions were suitably adjusted whereby to prepare the polyvinyl acetal resin listed in Table 2, and the polyvinyl acetal resin was used instead of the polyvinyl acetal resin used in Example 12. The results are listed in Table 2.

For Comparative example 7, a polyvinyl acetal resin having 78 ppm of the sodium content was prepared. As results thereof, the film after six hours had drastic increase of the number of the particles, and the deteriorated state of the film, in comparison to the film after one hour from the start.

## Claims

1. A polyvinyl acetal resin for thermoforming, the polyvinyl acetal resin being obtained by acetalization of a polyvinyl alcohol resin having a viscosity average polymerization degree of 500 to 2000 and a saponification degree of 99.5 mol% or more with aldehyde, wherein the sum of vinyl alcohol units acetalized with the aldehyde is 65 to 88 mol% with respect to the total repeating units, a content of alkali metal or alkali earth metal is 0.1 to 50 ppm, and a content of a plasticizer is 10 parts by mass or less with respect to 100 parts by mass of the polyvinyl acetal resin.

2. The polyvinyl acetal resin for thermoforming according to claim 1, wherein the molar ratio of a vinyl alcohol unit acetalized with an aldehyde having four or more carbon atoms/a vinyl alcohol unit acetalized with an aldehyde having three or less carbon atoms is 90/10 to 0/100.

3. The polyvinyl acetal resin for thermoforming according to claim 1, wherein the polyvinyl acetal resin is polyvinyl butyral.

4. The polyvinyl acetal resin for thermoforming according to any one of claims 1 to 3, wherein the sum of the vinyl alcohol units acetalized with the aldehyde is 70 to 88 mol% with respect to the total repeating units.

5. The polyvinyl acetal resin for thermoforming according to claim 1 to 4, wherein no plasticizer is included in the polyvinyl acetal resin.

6. The polyvinyl acetal resin for thermoforming according to any one of claims 1 to 5, wherein the polyvinyl acetal resin is obtained by adjusting the pH of a slurry from 6 to 8, which is obtained by acetalizing a polyvinyl alcohol resin, and then drying the slurry.

7. The polyvinyl acetal resin for thermoforming according to any one of claims 1 to 6, wherein a moisture content is adjusted from 0.005% to 2%.

8. A formed object comprising the polyvinyl acetal resin for thermoforming according to any one of claims 1 to 7,

9. A film comprising the polyvinyl acetal resin for thermoforming according to any one of claims 1 to 7.

10. A method of manufacturing a formed object, performing a thermoforming using a polyvinyl acetal resin for thermoforming, the polyvinyl acetal resin being obtained by acetalization of a polyvinyl alcohol resin having a viscosity average polymerization degree of 500 to 2000 and a saponification degree of 99.5 mol% or more with aldehyde, wherein the sum of vinyl alcohol units acetalized with the aldehyde is 65 to 88 mol% with respect to the total repeating units, a content of alkali metal or alkali earth metal is 0.1 to 50 ppm, and a content of a plasticizer is 10 parts by mass or less with respect to 100 parts by mass of the polyvinyl acetal resin.

11. A method of manufacturing a film, performing a thermoforming using a polyvinyl acetal resin for thermoforming, the polyvinyl acetal resin being obtained by acetalization of a polyvinyl alcohol resin having a viscosity average polymerization degree of 500 to 2000 and a saponification degree of 99.5 mol% or more with aldehyde, wherein the sum of vinyl alcohol units acetalized with the aldehyde is 65 to 88 mol% with respect to the total repeating units, a content of alkali metal or alkali earth metal is 0.1 to 50 ppm, and a content of a plasticizer is 10 parts by mass or less with respect to 100 parts by mass of the polyvinyl acetal resin.

## Patentansprüche

1. Polyvinylacetalharz zum Thermoformen, wobei das Polyvinylacetalharz durch Acetalisierung eines Polyvinylalkoholharzes mit einem viskositätsmittleren Polymerisationsgrad von 500 bis 2000 und einem Verseifungsgrad von 99,5 Mol-% oder mehr mit Aldehyd erhalten wird, wobei die Summe der mit dem Aldehyd acetalisierten Vinylalkohol-Einheiten 65 bis 88 Mol-%, bezogen auf die gesamten Wiederholungseinheiten, beträgt, der Gehalt an Alkali-metall oder Erdalkalimetall 0,1 bis 50 ppm beträgt und der Gehalt an Weichmacher 10 Massenteile oder weniger, bezogen auf 100 Massenteile des Polyvinylacetalharzes, beträgt.

2. Polyvinylacetalharz zum Thermoformen nach Anspruch 1, wobei das Molverhältnis von mit einem Aldehyd mit vier oder mehr Kohlenstoffatomen acetalisierten Vinylalkohol-Einheiten zu mit einem Aldehyd mit drei oder weniger Kohlenstoffatomen acetalisierten Vinylalkohol-Einheiten 90/10 bis 0/100 beträgt.

3. Polyvinylacetalharz zum Thermoformen nach Anspruch 1, wobei es sich bei dem Polyvinylacetalharz um Polyvinylbutyral handelt.

4. Polyvinylacetalharz zum Thermoformen nach einem der Ansprüche 1 bis 3, wobei die Summe der mit dem Aldehyd acetalisierten Vinylalkohol-Einheiten 70 bis 88 Mol-%, bezogen auf die gesamten Wiederholungseinheiten, beträgt.

5. Polyvinylacetalharz zum Thermoformen nach Anspruch 1 bis 4, wobei in dem Polyvinylacetalharz kein Weichmacher enthalten ist.

6. Polyvinylacetalharz zum Thermoformen nach einem der Ansprüche 1 bis 5, wobei das Polyvinylacetalharz durch Einstellen des pH-Werts einer Aufschlämmung von 6 bis 8, die durch Acetalisierung eines Polyvinylalkoholharzes erhalten wird, und anschließendes Trocknen der Aufschlämmung erhalten wird.

7. Polyvinylacetalharz zum Thermoformen nach einem der Ansprüche 1 bis 6, wobei der Feuchtigkeitsgehalt von 0,005% bis 2% eingestellt wird.

8. Formkörper, umfassend das Polyvinylacetalharz zum Thermoformen nach einem der Ansprüche 1 bis 7.

9. Folie, umfassend das Polyvinylacetalharz zum Thermoformen nach einem der Ansprüche 1 bis 7.

10. Verfahren zur Herstellung eines Formkörpers, wobei ein Thermoformen unter Verwendung eines Polyvinylacetalharzes zum Thermoformen durchgeführt wird, wobei das Polyvinylacetalharz durch Acetalisierung eines Polyvinylalkoholharzes mit einem viskositätsmittleren Polymerisationsgrad von 500 bis 2000 und einem Verseifungsgrad von 99,5 Mol-% oder mehr mit Aldehyd erhalten wird, wobei die Summe der mit dem Aldehyd acetalisierten Vinylalkohol-Einheiten 65 bis 88 Mol-%, bezogen auf die gesamten Wiederholungseinheiten, beträgt, der Gehalt an Alkalimetall oder Erdalkalimetall 0,1 bis 50 ppm beträgt und der Gehalt an Weichmacher 10 Massenteile oder weniger, bezogen auf 100 Massenteile des Polyvinylacetalharzes, beträgt.

11. Verfahren zur Herstellung einer Folie, wobei ein Thermoformen unter Verwendung eines Polyvinylacetalharzes zum Thermoformen durchgeführt wird, wobei das Polyvinylacetalharz durch Acetalisierung eines Polyvinylalkoholharzes mit einem viskositätsmittleren Polymerisationsgrad von 500 bis 2000 und einem Verseifungsgrad von 99,5 Mol-% oder mehr mit Aldehyd erhalten wird, wobei die Summe der mit dem Aldehyd acetalisierten Vinylalkohol-Einheiten 65 bis 88 Mol-%, bezogen auf die gesamten Wiederholungseinheiten, beträgt, der Gehalt an Alkalimetall oder Erdalkalimetall 0,1 bis 50 ppm beträgt und der Gehalt an Weichmacher 10 Massenteile oder weniger, bezogen auf 100 Massenteile des Polyvinylacetalharzes, beträgt.

**Revendications**

1. Résine de polyvinylacétal pour le thermoformage, la résine de polyvinylacétal étant obtenue par acétalisation d'une résine d'alcool polyvinylique ayant un degré de polymérisation moyen en viscosité de 500 à 2000 et un degré de saponification de 99,5 % en moles ou plus avec un aldéhyde, la somme des motifs d'alcool vinylique acétalisés avec l'aldéhyde étant de 65 à 88 % en moles, rapporté au total des motifs répétitifs, la teneur de métal alcalin ou de métal alcalino-terreux étant de 0,1 à 50 ppm, et la teneur d'un plastifiant étant de 10 parties en masse ou moins pour 100 parties en masse de la résine de polyvinylacétal.

2. Résine de polyvinylacétal pour le thermoformage selon la revendication 1, dans laquelle le rapport molaire entre un motif d'alcool vinylique acétalisé avec un aldéhyde ayant quatre atomes de carbone ou plus et un motif d'alcool vinylique acétalisé avec un aldéhyde ayant trois atomes de carbone ou moins est de 90/10 à 0/100.

3. Résine de polyvinylacétal pour le thermoformage selon la revendication 1, la résine de polyvinylacétal étant le polyvinylbutyral.

4. Résine de polyvinylacétal pour le thermoformage selon l'une quelconque des revendications 1 à 3, dans laquelle la somme des motifs d'alcool vinylique acétalisés avec l'aldéhyde est de 70 à 88 % en moles, rapporté au total des motifs répétitifs.

5. Résine de polyvinylacétal pour le thermoformage selon l'une quelconque des revendications 1 à 4, aucun plastifiant n'étant contenu dans la résine de polyvinylacétal.

6. Résine de polyvinylacétal pour le thermoformage selon l'une quelconque des revendications 1 à 5, la résine de polyvinylacétal étant obtenue en ajustant le pH d'une suspension épaisse de 6 à 8, laquelle est obtenue en acétalisant une résine d'alcool polyvinylique, puis en séchant la suspension épaisse.

7. Résine de polyvinylacétal pour le thermoformage selon l'une quelconque des revendications 1 à 6, dans laquelle le taux d'humidité est ajusté de 0,005 % à 2 %.

8. Objet façonné comprenant la résine de polyvinylacétal pour le thermoformage selon l'une quelconque des revendications 1 à 7.

9. Film comprenant la résine de polyvinylacétal pour le thermoformage selon l'une quelconque des revendications 1 à 7.

10. Procédé de fabrication d'un objet façonné par réalisation d'un thermoformage au moyen d'une résine de polyvinylacétal pour le thermoformage, la résine de polyvinylacétal étant obtenue par acétalisation d'une résine d'alcool

polyvinylique ayant un degré de polymérisation moyen en viscosité de 500 à 2000 et un degré de saponification de 99,5 % en moles ou plus avec un aldéhyde, la somme des motifs d'alcool vinylique acétalisés avec l'aldéhyde étant de 65 à 88 % en moles, rapporté au total des motifs répétitifs, la teneur de métal alcalin ou de métal alcalino-terreux étant de 0,1 à 50 ppm, et la teneur d'un plastifiant étant de 10 parties en masse ou moins pour 100 parties en masse de la résine de polyvinylacétal.

**11.** Procédé de fabrication d'un film par réalisation d'un thermoformage au moyen d'une résine de polyvinylacétal pour le thermoformage, la résine de polyvinylacétal étant obtenue par acétalisation d'une résine d'alcool polyvinylique ayant un degré de polymérisation moyen en viscosité de 500 à 2000 et un degré de saponification de 99,5 % en moles ou plus avec un aldéhyde, la somme des motifs d'alcool vinylique acétalisés avec l'aldéhyde étant de 65 à 88 % en moles, rapporté au total des motifs répétitifs, la teneur de métal alcalin ou de métal alcalino-terreux étant de 0,1 à 50 ppm, et la teneur d'un plastifiant étant de 10 parties en masse ou moins pour 100 parties en masse de la résine de polyvinylacétal.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001206741 A
- JP 2001226152 A
- JP 2008105942 A
- JP 7017745 A
- JP 2002138107 A
- US 2002006508 A


### Non-patent literature cited in the description


- *JIS K6728,* 1977
- *JIS-K6728,* 1977